# EUROPEAN PATENT APPLICATION

(11) **EP 4 546 178 A1**
(43) Date of publication of application: **30.04.2025**
(21) Application number: 24194379.4
(22) Date of filing: 13.08.2024
(51) Int. Cl.: G06F 21/31, G06F 40/00, G06N 3/02, H04L 9/40, G06F 21/30, H04L 9/32, H04W 12/06, G06N 3/08, G06F 18/213, G06V 30/32

(54) **USER-ACTIVITY AND LOCATION BASED IMAGE AUTHENTICATION WITH GENERATIVE ARTIFICIAL INTELLIGENCE**

(30) Priority: 25.10.2023 EP 23205926
(71) Applicant: THALES DIS CPL USA, INC., Austin, TX 78759 (US)
(72) Inventor: YAHYA, David, OTTAWA, K2E 7M6 (CA); GALKIN, Andrei, OTTAWA, K2E 7M6 (CA); SOHAL, Vinayak, OTTAWA, K2E 7M6 (CA); LEGUERRIER, Nick, OTTAWA, K2E 7M6 (CA); STOIANOV, Stan, OTTAWA, K2E 7M6 (CA); LABOURIE, Florent, OTTAWA, K2E 7M6 (CA)
(74) Representative: Grevin, Emmanuel

(57) **Abstract**

Provided is a method (100) and system (200) for recent user-activity image based authentication. The system collects (202) recent user-activity and location data, generates (214) user-knowledge events from the recent user-activity according to location data, generates (421) random image questions concerning the user-knowledge events based on location. The random image questions test the user's knowledge of their recent user-activity according to location. A generative Applications Programming interface (API) (140) parses (220) the answered image questions, queries (222) the database for an expected response to the answered image questions, and compares (224) the expected response to the answers received to authenticate the user. In some embodiments a DALL-E (161) component and a GPT-4 V (162) component are used together in conjunction for such purposes. Other embodiments are disclosed.

## Description

### TECHNICAL FIELD

The present invention relates generally to a system and method for secure user authentication by generative Artificial Intelligence (Al) to create random image questions from recent user-activity and location data across communication platforms.

### BACKGROUND

Generative Artificial Intelligence (GenAl) is positioned to revolutionize the field of Identity and Access Management (IAM) in the ecosystem of cybersecurity and data protection. As one example, GenAl can create sophisticated facial recognition systems for identity authentication. It can generate and analyze facial data, making it possible to identify and authenticate users based on their unique facial features. This is one example, whereby a single image modality is employed for authentication purposes.

Recent advances in artificial intelligence are directed to multi-modality, which is a new paradigm whereby various data types, such as image, text and speech are combined with multiple intelligence processing algorithms to achieve higher performances. GenAl can also be coupled with multifactor authentication (MFA) implementations. These Al systems can process multiple data inputs to produce more accurate, sophisticated outputs than unitary Al systems. One example is OpenAi's GPT-4V with vision capabilities to process image inputs in addition to text. Multimodal Al gives users the ability to provide multiple data modalities and generate outputs with those modalities. As one example, presenting a photo of products on a table can generate a written list of the items and costs as a response.

Multimodal Al and multimodal models represent a big step in how developers build and expand the functionality of Al in the next generation of applications. These current advancements in Al are largely due to Large Language Models (LLMs) that can create images, and for which the LLMs can effectively see and analyze images. A LLM is a computational model notable for its ability to achieve general-purpose language generation and other natural language processing tasks such as classification. The latest trend is towards smaller, more efficient modules suitable for local deployment.

One of the technical challenges of multi-modal AI centers on how to integrate multi-modal AI systems for authentication purposes using local LLMs. A local LLM executes on computer processing units and memory, removing the need for scarce GPU resources, in order to integrate LLMs into application development workflows, without compromising performance or productivity. Gathering high-quality training data, managing computational constraints, and determining out how to actually deploy a local LLM remains a technical hurdle. Other user challenges include how to best perform this multi-modal integration of local LLMs for people with disabilities. For example, for users with vision impairments, current methods lack sound-based modalities like "Speak" or "Record surrounding sound."

As another example, for people with physical handicaps, such as a hand disability, this limits their ability to effectively use keyboards. There also exist challenges in Industrial and Hostile Environments. For example, in Industrial Settings, adapted multi-factor authentication (MFA) is needed for factory workers who struggle with current User Interfaces (UX). In these situations, picture and video modalities may be more suitable. As another example, hostile environments can introduce concerns. In a military context, field missions require robust authentication. In a police context, field missions need secure, quick authentication. In a hospital environment, there is a continuing need for secure and safe authentication areas.

Problems abound on best practices to effectively integrate local LLMs into multi-modal authentication systems. Traditional authentication methods are not always satisfactory. Also, privacy concerns are apparent with cloud-based Al processing, and there remain inadequate solutions for specific user needs and environments. Existing authentication approaches are all still vulnerable to exploit and attack and appear to become less effective over time. As a result, there is a need for an innovative authentication solution that not only enhances security but also introduces a dynamic aspect to the local LLM and multi-modal Al integration process, for example, with emphasis on stronger user identity, better access controls including multi-factor authentication (MFA), and improved security posture.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system (200) for recent user-activity image based authentication is provide. The system comprises one or more processors and memory coupled to the one or more processors, wherein the memory includes one or more partitions and computer instructions which when executed by the one or more processors causes the one or more processors to perform operations via a user activity monitor (110), an App Service (127), and a generative Artificial Intelligence (Al) Applications Programming Interface (genAPI) (420). The user activity monitor (110) can collect (202) recent user-activity across two or more communication platforms (170,420), wherein one of the communication platforms is a location based platform (420) and the other is a social media platform (170). The App Service (127) can be communicatively coupled to said user activity monitor (110), to store in a database (130) recent user-activity converted (204) into a vector format. The generative Artificial Intelligence (Al) Applications Programming Interface (genAPI) (420) can be coupled to the App Service (127), a database (130) and an Al engine (141) to generate (214) user-knowledge events from the recent user-activity in vector format, and generate (421) random image questions (172,422) from said user-knowledge events combined from the two or more communication platforms (170, 420), wherein the random image questions (172,422) comprise a text question and associated user-selected images (173, 423) that test the user's knowledge of their recent user-activity.

In some embodiments the system further includes a DALL-E (161) component, wherein genAPI (140) by way of interaction to an App Service (127), AI Engine (140), DALL-E (161) and database (130) generates user-knowledge events with user location data from recent user-activity in vector format to generate random image questions concerning the user-knowledge events and location based information derived from the word embeddings.

In some embodiments the system further includes a GPT-4 V (162) component, wherein genAPI 140 by way of interaction to the App Service (127), AI Engine (140), GPT-4 V (162), and database (130) generates user-knowledge events from answered image questions, and generates expected answers for these user-knowledge events according to location data derived from the word embeddings.

In some embodiments the user authentication module (120) is provided to request said random image questions from the genAPI (140); present (424) the random image questions to, and receive answers from, a user as part of an authentication step; transmit (425) answered questions and the answers from the random image questions (173, 423) to the genAPI (140), wherein the genAPI (140) by way of the App Service (127) parses the answered questions, queries (222) the database (130) and AI Engine (141) for an expected answer to the answered questions, compares (224) the expected answer to the answers received from the user, and authenticates the user if the compare is within a probabilistic threshold.

In some embodiments, the location based platform (420) is one among a Global Positioning System (GPS), a smart watch, or a GPS map coupled to said user activity monitor (110), and the social media platform (170) is one among a social media app, a social network, a discussion forum, a content-sharing network, a blog or community network, a shopping network, and a content-hosting network; and a format of a user response is a user-selected image (173, 423) that by way of Image to Text in AI engine (141) converts said user-selected image into text.

In some embodiments, the user authentication module: presents a multi-factor authentication option (121); requests the user to take a picture of an object in their vicinity; processes the picture by way of a Large Language Model (LLM); validates the image; and authenticates the user in view of the random image questions (173, 423).

In some embodiments, recent user-activity on the social media platform (170), is identified from updates to social media profile, pictures, texts, chats, storyboard, or marketplace, and on the location based platform platform (Location Module 420), is identified from user logs of an authentication server implementing a protocol from one among Kerberos, RADIUS, LDAP, OAuth2 or SAML for verifying an identify and authorizing the user,

In some embodiments said step of generating user-knowledge events includes determining a recency of user activity and events in view of the user logs, and said step of generating random images retrieves user-knowledge events according to location data from recent user activities occurring only while the user is simultaneously logged into the social media platform.

In some embodiments, the database (130) is a NoSQL database that stores JSON objects containing entries for question content in accordance with questionnaire policy and enforcement thereof, and a list of precompiled questions. In some embodiments the database (130) is a NoSQL database and said vector is formatted to additionally include a first-time image stamp establishing time and date of said capturing step for enforcing a recency of said recent user-activity based image authentication; and a second time image stamp establishing time and date of content for enforcing a relevancy of random image question content during said recency of said user-activity based image authentication according to location data.

In some embodiments a method (100) for recent user-activity image based authentication is provided. The method includes collecting (202) recent user-activity across two or more communication platforms (170, 420) by way of a user activity monitor (110), wherein one of the communication platforms is a location based platform (420) and the other is a social media platform (170); storing recent user-activity converted (204) into a vector format in a database (130) by way of an App Service (127); generating (214) user-knowledge events from the recent user-activity in vector format by way of a generative image Artificial Intelligence (Al) Applications Programming Interface (genAPI) (140); generating (421) random image questions concerning the user-knowledge events combined from the two or more communication platforms by way of the genAPI, wherein the random image questions (172, 422) comprise a text question and associated user-selected images (173, 423) that test the user's knowledge of their recent user-activity; and, by way of a user authentication module (120): requesting said random image questions from the genAPI (140); presenting (424) the random image questions to, and receiving answers from, the user as part of an authentication step; transmitting (425) answered questions and the answers from the random image questions (173, 423) to the genAPI (140).

The genAPI (140) by way of the App Service (127) can parse the answered questions, queries (222) the database for an expected answer to the answered image questions, compares (224) the expected answer to the answers received from the user, and according to location to authenticate the user if the compare is within a probabilistic threshold.

In some embodiments a DALL-E (161) component and a GPT-4 V (162) component are used together in conjunction for such purposes, though in some embodiments each said component may be individually used instead.

In some embodiments this includes generating user-knowledge events with user location data from recent user-activity in vector format; and generating random image questions concerning the user-knowledge events and location based information derived from word embeddings, by way of genAPI (140) through interaction to an App Service (127), AI Engine (140), database (130), and a DALL-E (161) component.

In some embodiments this includes generating user-knowledge events from answered image questions; and generating expected answers for these user-knowledge events according to location data derived from word embeddings, by way of genAPI 140 through interaction to the App Service (127), AI Engine (140), database (130), and a GPT-4 V (162).

The location based platform (420) can be one among a Global Positioning System (GPS), a smart watch, or a GPS map coupled to said user activity monitor (110), and the social media platform (170) is one among a social media app, a social network, a discussion forum, a content-sharing network, a blog or community network, a shopping network, and a content-hosting network, wherein a format of a user response is a user-selected image (173, 423) that by way of Image to Text in AI engine (141) converts said user-selected image into text.

In some embodiments, the method (100) includes presenting a multi-factor authentication option (121); requesting the user to take a picture of an object in their vicinity; processing the picture by way of a Large Language Model (LLM); validating the image; and authenticating the user in view of the random image questions (173, 423).

In some embodiments, recent user-activity on the social media platform (170), includes updates to social media profile, pictures, texts, chats, storyboard, or marketplace, and, on location based platform (420), is identified from user logs of an authentication server implementing a protocol from one among Kerberos, RADIUS, LDAP, OAuth2 or SAML for verifying an identify and authorizing the user. In some cases, identifying user-knowledge events includes determining a recency of user activity and events in view of the user logs, and said step of generating random images retrieves user-knowledge events from recent user activities occurring only while the user is simultaneously logged into the two or more communication platforms.

In some embodiments, the method (100) includes logging said recent user activity and events in a natural format that is vectorized for storage as a vector in a database and suitable for use with Large Language Models (LLMs); and enforcing bounds on the storage and use of the vector in a random question presented to the user for authentication purposes in accordance with the questionnaire policy, wherein the bounds are one of a time limit, a privacy limit, a security limit or a content limit.

In some embodiments, the method (100) includes enforcing a recency of said user-activity based image authentication by way of a first image time stamp establishing time and date of said collecting step; and enforcing a relevancy of random image question content during said recency of said user-activity based authentication by way of a second image time stamp establishing time and date of image content, wherein the database is a NoSQL database and said vector is formatted to additionally include said first image time stamp and said second image time stamp.

In some embodiments, the method (100) includes evaluating a questionnaire policy that includes information relevant to said recent user-activity, and establishes limits on date, location, people, picture, text, comments, posts, tags, and storyboard information and events for enforcing relevancy and recency.

In some embodiments, recent user event information is embedded as an attribute in an Access Token to extend authentication rules, and wherein the Access Token is one of a Security Assertion Markup Language (SAML) transaction or a JSON Web Token (JWT).

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG 1A** depicts an exemplary use-case for recent user-activity and location based generative image authentication in accordance with some embodiments;
**FIG. 1B** depicts a method for recent user-activity image based authentication according to location in accordance with some embodiments;
**FIG. 2** depicts a system of secure user-activity image based authentication according to location within the IAM ecosystem in accordance with some embodiments; and
**FIG. 3** depicts an exemplary diagrammatic representation of a machine and hardware platform suitable for use in the system and to perform the methods in accordance with an embodiment.

Specific embodiments in this invention have been shown by way of example in the foregoing drawings and are hereinafter described in detail. The figures and written description are not intended to limit the scope of the inventive concepts in any manner.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Identity and Access Management (IAM) is the security discipline that enables the right users to access the right resources at the right time for the right reasons. It is a framework of policies and technologies to ensure that these users have the appropriate access to technology resources. An IAM administrator can centrally manage permissions to control which resources a user can access. Within the IAM ecosystem, authentication and authorization are two vital and separate information security processes that administrators use to protect systems and information. Authentication verifies the identity of a user or service, and authorization determines their access rights. Authentication is the process of validating the identity of a registered user or process before enabling access to protected networks and systems.

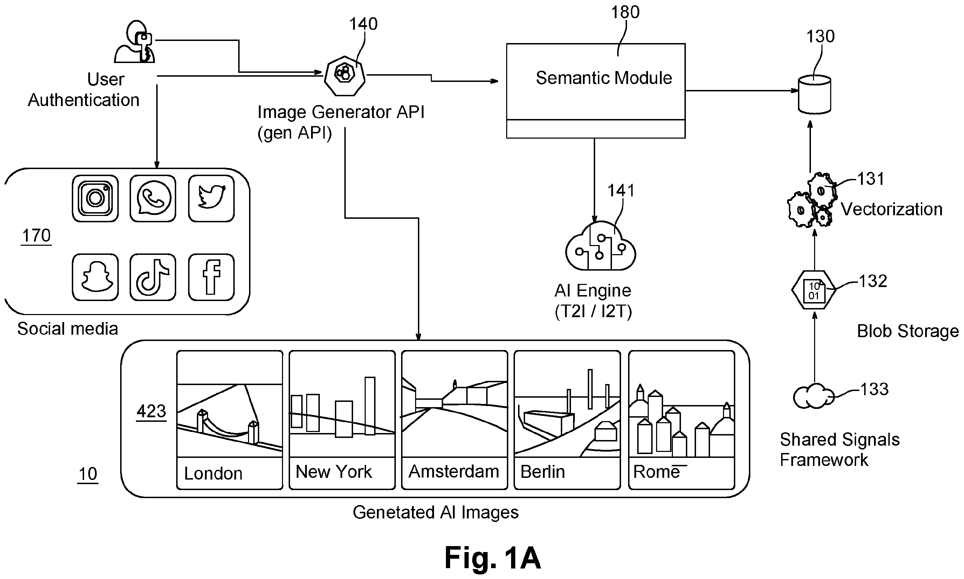

**FIG 1A** illustrates an exemplary use-case **10** for recent user-activity image based authentication according to location in some embodiments. Other use cases are contemplated. In this example, the user authenticates their identity on a secure platform, such as a mobile device, or smart watch. Here, the Image Generator API (hereinafter, genAPI) **140** generates images **423** that are presented to the user based on their recent user activity, from which the user needs to select to confirm. The user activity and events may be based in combination on their interactions with a social media application and in conjunction with the user's current or past identified location. For example, it may present the user with a series of pictures of landmarks at known locations, represented by the generate images **423,** and ask the user to identify which pictures are related to their recent location.

Accompanying the images **423** are associated text questions, also produced by genAPI **140,** based on their activity with social media apps **170,** and/or also user location based activity, for example, where the user is, or has been active, for example, using Global Positioning System (GPS) data, such as on a smart watch that tracks running activity, or vehicle activity on a GPS maps application. This is in contrast to other GenAl systems that may generate only text questions without pictures, and that does not use in real-time location based information to generate questions and images. Here, for example, it can detect the recent GPS position and propose an image of this position, or it can detect the social media **170** application used recently and generate the logo of each application. To authenticate, the user selects the image that best represents their recent activities.

In other example use-cases, it may ask the user to take a picture of an object with their favorite color. Responsive to the user then taking a picture, it analyzes the image to determine if the predominant color in the image matches the user's previously enrolled favorite color and profile information, and additionally confirms that the color in the picture is consistent with the user location of the picture. It will then grant the user access if the color matches, otherwise, it will not authenticate the user and may optionally ask for additional verification. In this example context, an embedded LLM is considered for authenticating the user.

The embedded LLM analyzes the user uploaded image, identifies the object and color in the image, and matches the identified color with the user's profile information, such as favorite color. The embedded LLM utilize a locally deployed, smaller-scale LLM for processing and validating user inputs. With respect to a learned feature for local Color Identification, LLM will identify and validate the color of objects in images directly on the device, similar to how biometric data like fingerprints are processed locally. To enhance privacy and security by processing data locally, it reduces the need to transmit sensitive information over the network.

As shown, the genAPI **140** is coupled to a Semantic Module **180** that serves as an efficient middleware to enable rapid delivery of enterprise-grade user-activity image based authentication solutions. By way of the Semantic Module **180** coupled to the AI Engine **141** and vector database **130,** genAPI **140** can read logs, extract location information, and generate images based on recent user locations. It can also generate an application logo that the user used before. This variation enhances the richness of the user experience by incorporating visual elements tied to user's activities.

In some embodiments, the Semantic Module **180** is a lightweight, open-source development kit that builds AI agents that integrate Language Models (LLMs) like OpenAl, Azure OpenAl, with C#, Python, or Java codebases. For this purpose, the Semantic Module **180** is coupled to the AI Engine **141** for generating the images and associated text based questions related to the images based on user activity and knowledge. The Artificial Intelligence (Al) Engine **141** provides both generated text to image (T2I) conversion and generated image to text (I2T) conversion. The Semantic Module **180** is also coupled to a vectorized data base **130,** which includes capabilities for Vectorization **131,** Blob Storage **132,** and a Shared Signals Framework **133,** as described further ahead. The Semantic Module **180** coordinates and orchestrates interactions between the AI Engine **141** and the vectorized database **130** to provide the back-end support for the Image Generation API **140.**

Briefly, with respect to vectorized data base **130,** vectorization means the conversion of an user-activity event, device event, security event, execution trace, event sequence, user interaction step, or other user, system or environmental event to a numeric vector for serving as an input pattern into machine learning, or for classification purposes. Vectorization is also extensible to include "event location embeddings" which are a type of distance metric representations that allows user activity and events at various locations (e.g. GPS position, longitude, latitude) with similar activities/applications/uses to have a similar representation.

Implementation of the Shared Signals Framework **133** is contemplated in some arrangements as a means to securely share security events and signals between related systems and save them in the Blob Storage **132.** These events and signals cam also be further processed and filtered, for example, to reduce data size, and enhance salient features of the various captured data modalities (e.g. voice, audio, images, video, sound, etc) prior to vectorization. The SSF facilitates the collection of user activity signals (events and location data) from various sources, ensuring a comprehensive understanding of the user's behavior (and location) across multiple platforms and services. By integrating the SSF into the authentication process, user activity signals can be collected and stored as distance vectors in the secure vector database. These dynamic signals serve as a rich source of information for the generation of random questions or generative tokens for authentication. By blending the collection of user activities **110** with the SSF, the authentication process becomes adaptable and responsive to the user's changing behavior and location.

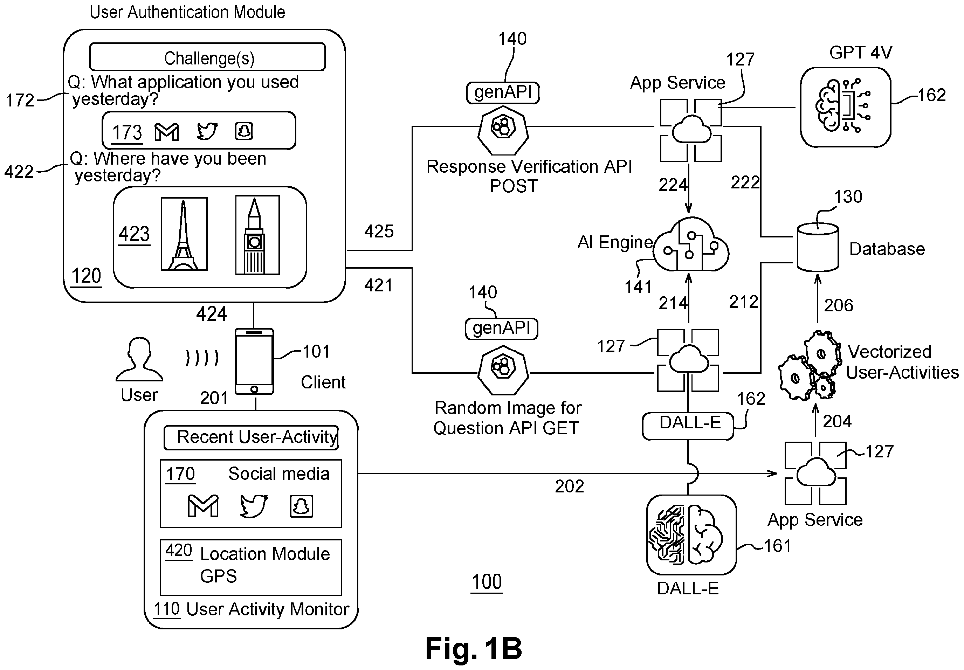

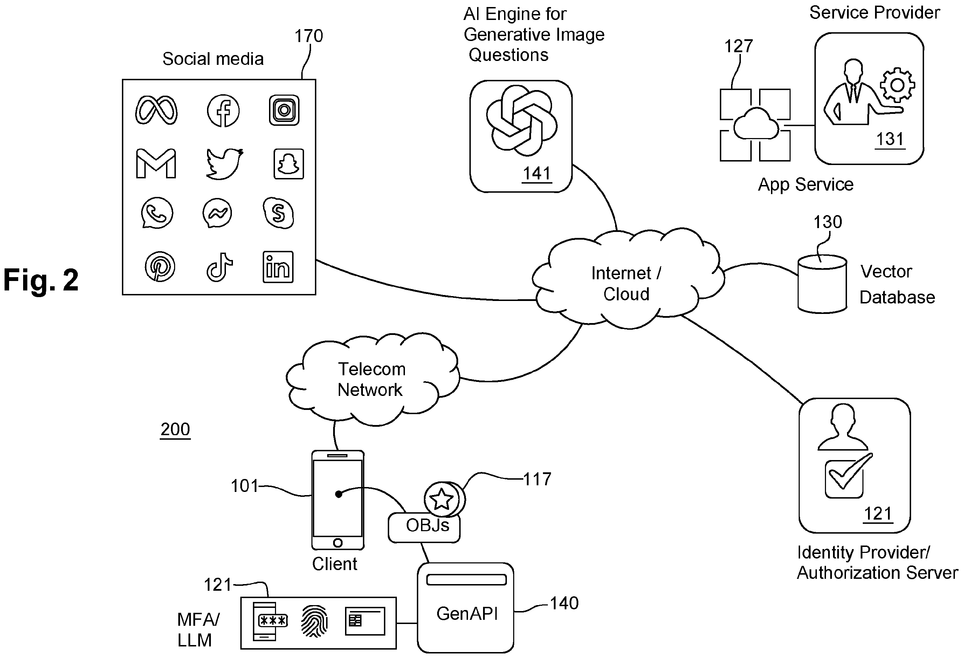

Referring to **FIG. 1B****,** a sequence of steps for a method **100** of recent user-activity image based authentication according to location in some embodiments is shown. For practicing the method steps, an exemplary architecture for recent user-activity image based authentication with emphasis on communication interfaces is illustrated. Other architectures are contemplated. When describing the steps of the method **100,** reference will be made to components shown in **FIG. 1A** and **FIG 2****,** for example, Client **101,** App Service **127,** database **130,** and genAPI **140.** The User Activity Monitor **110** and User Authentication Module **120** can be independent programs, or integrated modules included the client **101,** or an application running thereon. More or less than the number of components or steps shown may be used in practice or when implemented in different embodiments when referring to the method steps.

The social media platform **170** can be one among a social media app, a social network, a discussion forum, a content-sharing network, a blog or community network, a shopping network, and a content-hosting network. The Location Module **420** may be GPS firmware of the client **101,** or an application referencing location based information from the GPS firmware or other application code. Location based information can include positions of location data or coordinates, expressed in Latitude and Longitude format. The Location Module **42** may provide additional attributes such as elevation or altitude may be included to help data users and application services **127** obtain more accurate picture of the geographic positions of their data.

The method **100** can start at step **201** where a user is interacting with the client **101.** At step **202,** the user activity monitor **110** collects recent user location based information from the Location Module **42,** including past and current locations, and recent user-activity in the social media platform **170.** User activity comprises those actions by the user when interacting and interfacing with the Client **101.** The actions may be related to captured human interaction with the Client device **101,** for example, audio, video, or text. As one example, recent user-activity on the social media platform **170** is detected by identifying updates to social media profile, pictures, texts, chats, storyboard, or marketplace.

Recent user-activity can also be identified from user logs of an authentication server implementing a protocol from one among Kerberos, RADIUS, LDAP, OAuth2 or SAML for verifying an identify and authorizing the user. This allows for continuous activity monitoring and detecting log in events, network activity, and resource access requests to quality as user-activity. In some embodiments, the user activity monitor **110** identifies user-knowledge events includes determining a recency of user activity in view of the user logs, and said step of generating random image questions retrieves user-knowledge events from recent user activities and location data of the client **101** occurring only while the user is simultaneously logged into a communication platform.

User actions and activities can also be associated with device events occurring in conjunction with the user's interaction on the communication platform. For example, user activity signals include information related to user location, interactions, system events, and security events. These system, device and security events, although independent from user-activity, can be used to embellish user-knowledge events and mental recollection in generating the random questions. The device events may be referenced in conjunction with user-activity when the AI Engine **141** generates user-knowledge events from recent user-activity and recent or past user location information.

At step **204** the App Service **127,** by way of a conversion utility, converts the recent user-activity into a vector format and at step **206** stores it in the database **130.** This database **130** serves as a repository for the user's behavior patterns, preferences, location data, and contextual information. In one arrangement, the Vector Database **130** securely stores the user's recent activities and location information in plain text format, thereby allowing for comprehensive analysis of user behavior patterns and preferences based on user location. The plain text format preserves the original data while ensuring efficient processing. This valuable insight enables a deep understanding of the user's unique characteristics, facilitating the generation of contextually relevant authentication challenges.

This vectorization provides the AI Engine **141** capability to analyze and utilize this event and location data to enhance the accuracy and effectiveness of the authentication process. By storing the user activities at corresponding locations of the user during those activities in a vector format, the database **130** enables efficient analysis and retrieval of user-specific information during the authentication process. Access to the Vector Database **130** is also strictly controlled, and appropriate encryption techniques are employed to protect the data at rest and in transit. It adheres to industry-standard security practices, including role-based access control, secure API endpoints, and secure communication protocols, to safeguard user data and prevent unauthorized access.

At step **421,** the User Authentication Module **120** presents a request to the Random Image for Question API component of the genAPI **140** for one or more random image questions related to recent user activity and according to past and/or present user location. The Random Image Question (or Generative Token Generation API for Images) facilitates the generation of contextually relevant image questions or generative image tokens based on the user's recent activities and locations stored in the Vector Database **130.** Here, it is in the form a GET command to the genAPI **140** which submits the user's response to the GET endpoint. This API component supports advanced algorithms, such as machine learning models or language models, to dynamically generate authentication challenges unique to each user. Notably, each authentication instance prompts the user with a series of image and location based questions or corresponding generative tokens that are tailored to their specific activities and locations, thereby creating a personalized and dynamic authentication challenge. The dynamic generation of questions or generative tokens enhances security by introducing an additional layer of verification that is difficult for malicious actors to replicate.

At step **212,** responsive to the GET command, the App Service **127** inquires the database **130** for recent user-activity and location based information, which is stored vector format. In some configurations, the database **130** references an AI similarity library that allows the App Service **127** to quickly search for word embeddings of the vectorized user-activity events that are similar to each other. It solves limitations of traditional query search engines that are optimized for hash-based searches and provides more scalable similarity search functions.

At step **214,** the App Service **127** then prepares and passes the word embeddings of the vector for recent user-activity to the AI Engine **141.** There is an optional step to specify the machine learning models or language model used to dynamically generate authentication challenges unique to each user in view of user-knowledge events in the form of random questions. It requests a generation of random questions based on the user's recent activities. The genAPI request can additionally include parameters to formulate an extent of the random question content generated according to the questionnaire policy. As one example, the AI Engine **141** via App Service **127** may interact with a DALL-E component **161** create realistic images (see generated images **423)** and artwork (e.g. city landmarks) from a description based on vectorized user activity data and events in the database **130.** DALL. E 3 are text-to-image models developed by OpenAI using deep learning methodologies to generate digital images from natural language descriptions known as "prompts".

Accordingly, genAPI **140** by way of interaction to the App Service **127,** AI Engine **140,** DALL-E component **161** and database **130** through steps **421, 212** and **214** effectively generates user-knowledge events with user location data from the recent user-activity in vector format as described above, and generates random image questions concerning the user-knowledge events and location based information, which can be derived from the word embeddings of the vectors. The resulting random image questions or generative tokens are designed to test and challenge the user's knowledge or recognition of their recent activities at certain locations.

At step **424,** The User Authentication Module **120** presents the random image questions to the user. It presents the random image questions to, and receive answers from, the user as part of the authentication step. The questions are generated to combine, and mix in, user activities that only the user should know from their activities at certain locations. The questions are designed to pull recent user activity content from the social media platform **170** and Location Module **420** to form the random image questions. In some embodiments, the random questions additionally present as challenge a "Completely Automated Public Turing test to tell Computers and Humans Apart" (CAPTCHA) with content relevant to recent user-activity according to location based information.

As illustrated here for example, the User Authentication Module **120** may present a first user activity question **172** "What application you used yesterday" with corresponding images **173** for the social media platforms **170.** The user is required to select the image **173** corresponding to the user activity question **172,** thereby producing a user-selected image answer. Similarly, the User Authentication Module **120** may present a second follow up, or concurrent, location based question **422** "Where have you been recently" with corresponding images **423** according to location data from the Location Module **420.** The user is required to select the image **423** corresponding to the location based question **422,** thereby producing a user-selected image answer.

Briefly, the genAPI **141** (reinforced by AI engine **140** where necessary) reads all these user activities and location data and automatically generate a unique token challenge as a question. User activities may be based on other factors such as GPS location and the challenge would be as follows: "Did you go out yesterday morning to buy a coffee on Yonge Street?" Yes/No. Or the combination of 2: "Did you go out yesterday morning to buy a coffee on Yonge Street and open Instagram?" Yes/No. If for some reason the user does not remember a specific activity, they can move on to the next challenge/question. The user decides which of the random questions to answer.

At step **220,** the User Authentication Module **120** presents the answered questions and corresponding user selected image answers to the Response Image Verification API component of the genAPI **140.** The set of random image questions presented to the user that they decide to answer, and respond with answers, are called answered image questions. The Response Verification API receives and analyzes the user's response (answered image questions) to the generated question (or generative token). Here, they are prepared in the form of a **POST** command, which then submits the user's response (answers along with the answered questions) to the POST endpoint. This API leverages computational techniques, including the integration of language models like ChatGPT, to compare the user's response with the expected response based on their activity signals. The **POST** command transmits answered questions and the answers from the random image questions to the App Service **127,** which parses the request and extracts the relevant data. Again, in some arrangements genAPI **140** is integrated at step **212** with the App Service **127** such that it is also communicatively coupled directly to the database **130** and AI engine **140** to perform such tasks.

At step **222,** Responsive to the POST command, the App Service **127** queries the vector database **130** using the extracted relevant data to retrieve relevant user activity data and location based information associated with the user's response (answered image questions and corresponding answers), which is stored vector format. The Response Image Verification component of the genAPI **140,** by way of the App Service **127,** database **130** and optional AI Engine **141,** performs a comprehensive analysis of the user's response (i.e., corresponding image answers to asked question), taking into account factors such as semantic similarity, contextual relevance, location information, and behavioral patterns to determine the authenticity of the user's response. By leveraging advanced algorithms, it verifies the authenticity of the user's response to the answered image questions, in view of the answer, recent user activity, user location data, and user knowledge events, and determines whether the authentication should be granted or denied.

In one arrangement, the Response Verification component of the genAPI **140** can be deployed on the Microsoft Azure ^{®} cloud platform, leveraging its robust infrastructure and services. Azure^{®} App Service provides a serverless architecture that ensures scalability, high availability, and efficient resource utilization. It may also leverage Azure^{®} Blob Storage to securely store the Vector Database **130,** enabling efficient storage and retrieval of user activity data. Azure^{®} Functions, a serverless compute service, are utilized to implement the APIs for generating random questions and verifying user responses. Azure Functions provide an event-driven, scalable approach to handle API requests and execute the necessary computations

At step **224,** the App Service **127** then prepares and passes the word embeddings of the asked image questions to the Al Engine **141** for generating an expected answer. This is similar to step **214,** but here, the word embeddings are associated with the answered image questions for generating an expected answer, whereas in step **214,** the word embeddings were associated with the vector for recent user-activity according to location data for generating random image questions. Similarly, this is an optional step to specify the machine learning models or language model used to dynamically generate expected answers in the form of word embeddings unique to the user-knowledge events and user location data associated with the asked image question.

As one example, the AI Engine **141** via the sameApp Service **127** may interact with a Chat based Generative Pre-Trained Transformer (GPT) model **162** for such purpose. As one example, a GPT-4 V component **162** for vision based generative and interpretive processing is used. It enables users to instruct GPT-4 to analyze image inputs provided by the user. Accordingly, genAPI **140** by way of interaction to the App Service **127,** AI Engine **140,** GPT-4 V **162,** and database **130** through steps **425, 222** and **224** effectively generates user-knowledge events from the answered image questions, and generates expected answers for these user-knowledge events according to location data similarly derived from the word embeddings.

At this point, genAPI **140** by way of the App Service **127,** database **130,** AI Engine **141,** GPT-4 V component **162** has generated an expected answer to the answered image questions. It now compares the expected answer to the answered image questions received from the user, and authenticates the user if the compare is within a probabilistic threshold. The genAPI **140** returns the authentication results in the form of a JSON object. The User Authentication Module **120** queries the genAPI 140 for this object which indicates whether the user is authenticated or not, and any relevant error messages.

**FIG. 2** illustrates a system **200** for secure user-activity image based authentication according to location utilizing dynamic and generative image question generation within an Identity and Access Management (IAM) ecosystem. The system **200** comprises the Client **101,** the AI Engine **141,** a Service Provider **131** and an Identity Provider (IdP) **121** communicatively coupled over the Internet and/or a telecommunications network. The Client **101,** Identity Provider **121** and License Server **131** each include one or more processors and memory coupled to the one or more processors, wherein the memory includes computer instructions which when executed by the one or more processors causes the one or more processors to perform the method steps. They may be connected over the network to other machines via a network communication device interface

Although not shown here, the Semantic Module **180** of FIG 1A may reside in the cloud, or for example, on the Service Provider **131** or another cloud service provider (CSP). The Client **101** is a computational device such as a computer or mobile device, with location based capabilities, such as GPS, communicatively connected to these components. It includes an operating system (OS) or browser for executing an Application (App) **102** as one example of a program that requires user-based image authentication. It may be a native app executing on the OS or a web app through a browser.

In a generic IAM ecosystem the user is authenticated either directly by the Identity Provider **121** or indirectly through the Service Provider **131.** Traditional authentication methods, relying solely on static username-password combinations, often fall short in providing robust security measures and can be easily compromised. To address these vulnerabilities, Multi-Factor Authentication (MFA) has gained popularity by introducing additional authentication factors like one-time passwords or biometric data to address security vulnerabilities. In this IAM ecosystem, MFA is coupled with LLMs as a layered approach **121** for generating image questions by way of the genAPI **140** to verify a user's identity for login for securing data and applications. MFA increases security because even if one credential becomes compromised, unauthorized users will be unable to meet the second authentication, especially, when it a generated image question that relies on user location-based information.

The client **101** generates random image questions as part of the authentication process based on recent user-activity and location information. The random image questions are generated by the genAPI **140** with support from the AI Engine **141,** vector database **130** , Identity Provider **121** and Service Provider **131.** Here, the random image questions are generated directly from the user's recent activities and locations across multiple communication platforms, including social media applications **170** and location based technologies. In some arrangements the genAPI **140** is exposed as an App Service by Service Provider **131** such that it is communicatively coupled to the database **130** and AI engine **140.** The genAPI **140** provides interaction with, and access to components (Identity Provider **121,** Service Provider **131,** AI Engine **141)** within the IAM environment, and the exchange of information relevant to user-activity authentication.

The Identity Provider **121** (IdP) is a service that creates, stores and manages digital identities. It provides the user or their internet-connected device authentication with a single set of login credentials. This ensures to other entities that the user is who they claim to be; it supports assertion message types: authentication, attribution and authorization. In other arrangements, the Identity Provider **121** may even authenticate the client **101.** The Identity Provider **121** can communicate with other entities and other web service providers via Security Assertion Markup Language (SAML), or data formats like Open ID Connect (OIDC) or Open Authorization (Oauth2). Oauth2 allows users to grant websites or applications access to their information on other websites but without giving them the passwords.

In some embodiments the genAPI **140** is a RESTful API, which is an architectural style for an application program interface (API) that uses HTTP requests to access and use data. That data can be used to GET, PUT, POST, PATCH and DELETE command types, which refers to the reading, updating, creating and deleting of operations concerning resources. GET requests are used to retrieve data, and POST requests are used to create data (related to quorum and resources; also, to produce and consume the quorum services and data) with the REST API. REST is a logical choice for building APIs that allow users to connect to, manage and interact with cloud services flexibly in a distributed environment, and allows cloud consumers to expose and organize access to HSM based web services.

The Identity Provider **121,** Service Provider **131,** Client **101,** and Application **102** exchange the access token objects (OBJs) **117** across the network **300.** The objects may be in the form of a Security Assertion Markup Language (SAML) transaction, a JSON Web Token (JWT) or JSON Web Token (JOT). Usually the token consists of three parts: a header, a payload body and signature. Inside the payload are claim assertion attributes, a sub-property attribute that is a unique identifier for a user, an audience attribute identifying who is the intended recipient to use ID Token, an issuer attribute which is the identify provider who created the token, and other pieces about the user.

The access token **117** contains information, not only related to standard authentication process, but also includes image and text data related and relevant to user location information for the presented image questions in real-time, during authentication, to ensure, and check, that questions are available for presentation to the user on receipt of the access token. As one example, recent user activity and location based information is embedded as an attribute with image data in the Access Token **117** to extend authentication rules.

The Client **101,** Identity Provider **121** and Service Provider **131** each include one or more processors and memory coupled to the one or more processors, wherein the memory includes computer instructions which when executed by the one or more processors causes the one or more processors to perform the method steps herein described. They may be connected over the network to other machines via a network communication device interface. In a networked deployment, they may operate in the capacity of a standalone mobile device, a client user machine in server-client user network environment, or as a peer machine in a peer-to-peer, or distributed, network environment.

In some embodiments, the Vector Database **130** is pre-processed using algorithms, such as TF-IDF (Term Frequency-Inverse Document Frequency) or Word2Vec, to transform the plain text activities into a vector representation. This vectorization enables efficient analysis and retrieval of user-specific information during the authentication process. Additionally, the implementation utilizes language models like ChatGPT, which are trained on large-scale text data, can generate the expected answer based on the user's activity data. These language models employ natural language understanding techniques to analyze the user's response and determine its authenticity.

Vectorization is also extensible to include "event embeddings" which are a type of distance metric representations that allows events with similar activities/applications/uses to have a similar representation. As an example, a vectorization of user interaction steps for a similar purpose may include event embeddings associated with those steps, such that a vector produced by a first sequence of user steps to perform a device task, are closest in a distance measure (e.g. Euclidean, Hamming, Manhattan, L1 norm, L2 norm, log, exp, etc.) to similar vectorized user steps and vectorized events. Although not directly equivalent, it shares similarities with "word embeddings" used for natural language processing. A word embedding is a learned representation for text where words that have the same meaning have a similar numeric representation.

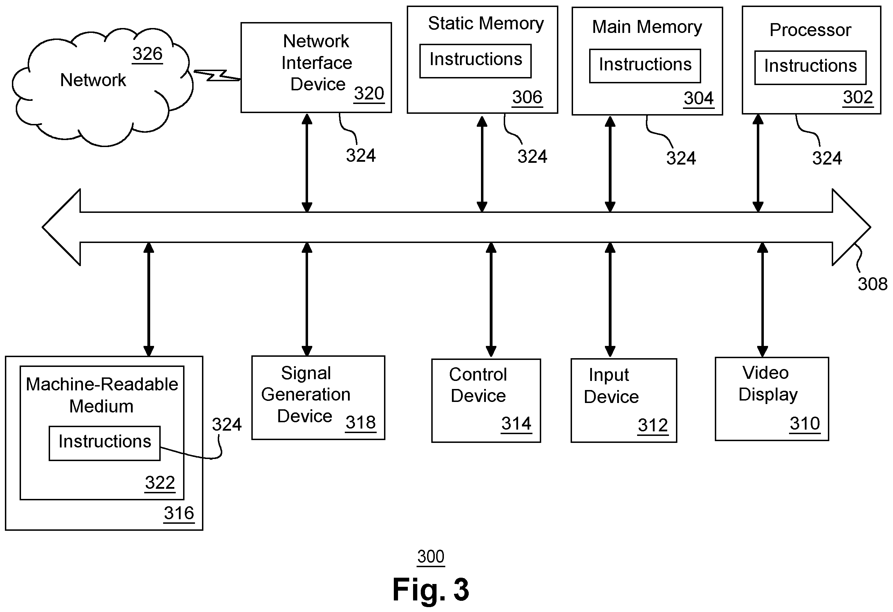

**FIG. 3** depicts an exemplary diagrammatic representation of a machine **300** and hardware platform suitable for use to perform the methods and steps exemplified in, and shown by components, of **FIGS 1-2** in accordance with various embodiments. This includes Client **101,** genAPI **140** , AI Engine **141,** App Service **127,** Service Provider **131,** Identity Provider **121,** and AI Engine **140.** For example, the method **100** can be performed by a hardware processor of the machine **300** executing computer program code instructions from an electronic memory to execute at least the method steps of FIG. 1B. At least one a hardware processor of machine **300** can execute computer program code instructions from an electronic memory to execute processes of at least one service associated with method **100.**

The machine **300** is shown in the form of a computer system **300,** within which a set of instructions, when executed, may cause the machine to perform any one or more of the methodologies discussed above. In some embodiments, the machine operates as a standalone device, such as a computer, laptop, mobile device, remote control, or display. In some embodiments, the machine may be connected over the network to other machines. In a networked deployment, the machine may operate in the capacity of a server or a client user machine in server-client user network environment, or as a peer machine in a peer-to-peer, or distributed, network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 300 may include a processor 302 (e.g., a central processing unit (CPU), a graphics processing unit (GPU, or both), a main memory 304 and a static memory 306, which communicate with each other via a bus 308. The computer system 300 may further include a video display unit 310 (e.g., a liquid crystal display or LCD), a flat panel, a solid-state display, or a cathode ray tube (CRT)). The computer system 300 may include an input device 312 (e.g., a keyboard, touchless sensing unit 110), a cursor control device 314 (e.g., a mouse), a disk drive unit 316, a signal generation device 318 (e.g., a speaker or remote control) and a network interface device 320.

The disk drive unit 316 may include a machine-readable medium 322 on which is stored one or more sets of instructions (e.g., software 324) embodying any one or more of the methodologies or functions described herein, including those methods illustrated above. The instructions 324 may also reside, completely or at least partially, within the main memory 304, the static memory 306, and/or within the processor 302 during execution thereof by the computer system 300. The main memory 304 and the processor 302 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium 322 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Platform as a Service (PaaS) for connecting mobile apps to cloud based services, and Security as a Service (SECaas).

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (200) for recent user-activity image based authentication, the system comprising:
one or more processors and memory coupled to the one or more processors, wherein the memory includes one or more partitions and computer instructions which when executed by the one or more processors causes the one or more processors to perform operations via:
a user activity monitor (110) to collect (202) recent user-activity across two or more communication platforms (170,420), wherein one of the communication platforms is a location based platform (420) and the other is a social media platform (170);
an App Service (127), communicatively coupled to said user activity monitor (110), to store in a database (130) recent user-activity converted (204) into a vector format;
a generative Artificial Intelligence (Al) Applications Programming Interface (genAPI) (420) coupled to the App Service (127), a database (130) and an AI engine (141) to
generate (214) user-knowledge events from the recent user-activity in vector format, and generate (421) random image questions (172,422) from said user-knowledge events combined from the two or more communication platforms (170, 420), wherein the random image questions (172,422) comprise a text question and associated user-selected images (173, 423) that test the user's knowledge of their recent user-activity; and
a user authentication module (120) to
request said random image questions from the genAPI (140);
present (424) the random image questions to, and receive answers from, a user as part of an authentication step;
transmit (425) answered questions and the answers from the random image questions (173, 423) to the genAPI (140),
wherein the genAPI (140) by way of the App Service (127) parses the answered questions, queries (222) the database (130) and Al Engine (141) for an expected answer to the answered questions, compares (224) the expected answer to the answers received from the user, and authenticates the user if the compare is within a probabilistic threshold.

2. The system of claim 1,
wherein a format of a user response is a user-selected image (173, 423) that by way of Image to Text in AI Engine (141) converts said user-selected image into text;
wherein the location based platform (420) is one among a Global Positioning System (GPS), a smart watch, or a GPS map coupled to said user activity monitor (110), and
the social media platform (170) is one among a social media app, a social network, a discussion forum, a content-sharing network, a blog or community network, a shopping network, and a content-hosting network.

3. The system according to any one of the previous claims includes a DALL-E (161) component,
wherein genAPI (140) by way of interaction to an App Service (127), AI Engine (140), DALL-E (161) and database (130) generates user-knowledge events with user location data from recent user-activity in vector format to generate random image questions concerning the user-knowledge events and location based information derived from the word embeddings.

4. The system according to any one of the previous claims includes a GPT-4 V (162) component,
wherein genAPI 140 by way of interaction to the App Service (127), AI Engine (140), GPT-4 V (162), and database (130) generates user-knowledge events from answered image questions, and generates expected answers for these user-knowledge events according to location data derived from the word embeddings.

5. The system according to any one of the previous claims, wherein the user authentication module:
presents a multi-factor authentication option (121);
requests the user to take a picture of an object in their vicinity;
processes the picture by way of an embedded Large Language Model (LLM);
validates the image; and
authenticates the user in view of the random image questions (173, 423),
wherein the embedded LLM analyzes the uploaded picture, identifies an object and color in the picture, and matches the identified object and color with a user's profile information for said authenticating.

6. The system according to any one of the previous claims, wherein recent user-activity:
on the social media platform (170), is identified from updates to social media profile, pictures, texts, chats, storyboard, or marketplace, and
on the location based platform platform (420), is identified from user logs of an authentication server implementing a protocol from one among Kerberos, RADIUS, LDAP, OAuth2 or SAML for verifying an identify and authorizing the user,
wherein said step of generating user-knowledge events includes determining a recency of user activity and events in view of the user logs, and said step of generating random images retrieves user-knowledge events according to location data from recent user activities occurring only while the user is simultaneously logged into the social media platform.

7. The system according to any one of the previous claims, wherein the database (130) is a NoSQL database that stores JSON objects containing entries for question content in accordance with questionnaire policy and enforcement thereof, and a list of precompiled questions, wherein the database (130) is a NoSQL database and said vector is formatted to additionally include
a first-time image stamp establishing time and date of said capturing step for enforcing a recency of said recent user-activity based image authentication; and
a second time image stamp establishing time and date of content for enforcing a relevancy of random image question content during said recency of said user-activity based image authentication according to location data.

8. A method (100) for recent user-activity image based authentication, the method comprising:
collecting (202) recent user-activity across two or more communication platforms (170, 420) by way of a user activity monitor (110), wherein one of the communication platforms is a location based platform (420) and the other is a social media platform (170);
storing recent user-activity converted (204) into a vector format in a database (130) by way of an App Service (127);
generating (214) user-knowledge events from the recent user-activity in vector format by way of a generative image Artificial Intelligence (Al) Applications Programming Interface (genAPI) (140);
generating (421) random image questions concerning the user-knowledge events combined from the two or more communication platforms by way of the genAPI, wherein the random image questions (172, 422) comprise a text question and associated user-selected images (173, 423) that test the user's knowledge of their recent user-activity; and,
by way of a user authentication module (120):
requesting said random image questions from the genAPI (140);
presenting (424) the random image questions to, and receiving answers from, the user as part of an authentication step;
transmitting (425) answered questions and the answers from the random image questions (173, 423) to the genAPI (140),
wherein the genAPI (140) by way of the App Service (127) parses the answered questions, queries (222) the database for an expected answer to the answered questions, compares (224) the expected answer to the answers received from the user, and according to location to authenticate the user if the compare is within a probabilistic threshold.

9. The method of claim 8,
wherein the location based platform (420) is one among a Global Positioning System (GPS), a smart watch, or a GPS map coupled to said user activity monitor (110), and
the social media platform (170) is one among a social media app, a social network, a discussion forum, a content-sharing network, a blog or community network, a shopping network, and a content-hosting network,
wherein a format of a user response is a user-selected image (173, 423) that by way of Image to Text in AI Engine (141) converts said user-selected image into text.

10. The method of any of claims 8 to 9, comprising
presenting a multi-factor authentication option (121);
requesting the user to take and upload a picture of an object in their vicinity;
processing the picture by way of an embedded Large Language Model (LLM);
validating the image; and
authenticating the user in view of the random image questions (173, 423),
wherein the embedded LLM analyzes the uploaded picture, identifies an object and color in the picture, and matches the identified object and color with a user's profile information for said authenticating.

11. The method of any of claims 8 to10,
wherein recent user-activity:
on the social media platform (170), includes updates to social media profile, pictures, texts, chats, storyboard, or marketplace, and
on location based platform (420), is identified from user logs of an authentication server implementing a protocol from one among Kerberos, RADIUS, LDAP, OAuth2 or SAML for verifying an identify and authorizing the user,
wherein said step of identifying user-knowledge events includes determining a recency of user activity and events in view of the user logs, and said step of generating random images retrieves user-knowledge events from recent user activities occurring only while the user is simultaneously logged into the two or more communication platforms.

12. The method of any of claims 8 to 11, further comprising:
logging said recent user activity in a natural format that is vectorized for storage as a vector in a database and suitable for use with Large Language Models (LLMs); and
enforcing bounds on the storage and use of the vector in a random question presented to the user for authentication purposes in accordance with the questionnaire policy,
wherein the bounds are one of a time limit, a privacy limit, a security limit or a content limit,
wherein the questionnaire policy includes information relevant to said recent user-activity, and establishes limits on date, location, people, picture, text, comments, posts, tags, and storyboard information and events for enforcing relevancy and recency,
wherein recent user activity and event information is embedded as an attribute in an Access Token to extend authentication rules, and wherein the Access Token is one of a Security Assertion Markup Language (SAML) transaction or a JSON Web Token (JWT).

13. The method of any of claims 8 to 12, further comprising:
enforcing a recency of said user-activity based image authentication by way of a first image time stamp establishing time and date of said collecting step; and
enforcing a relevancy of random image question content during said recency of said user-activity based authentication by way of a second image time stamp establishing time and date of image content,
wherein the database is a NoSQL database and said vector is formatted to additionally include said first image time stamp and said second image time stamp.

14. The method of any of claims 8 to 13, includes
generating user-knowledge events with user location data from recent user-activity in vector format; and
generating random image questions concerning the user-knowledge events and location based information derived from word embeddings,
by way of genAPI (140) through interaction to an App Service (127), AI Engine (140), database (130), and a DALL-E (161) component.

15. The method of any of claims 8 to 14 includes
generating user-knowledge events from answered image questions; and
generating expected answers for these user-knowledge events according to location data derived from word embeddings,
by way of genAPI 140 through interaction to the App Service (127), AI Engine (140), database (130), and a GPT-4 V (162).
